# EUROPÄISCHE PATENTSCHRIFT

(11) **EP 4 215 952 B1**
(45) Veröffentlichungstag und Bekanntmachung des Hinweises auf die Patenterteilung: **29.05.2024**
(21) Anmeldenummer: 22152805.2
(22) Anmeldetag: 21.01.2022
(51) Int. Cl.: G01V 8/10, G01V 8/12, G01V 8/14, G01V 8/20

(54) **OPTISCHER SENSOR**
OPTICAL SENSOR
CAPTEUR OPTIQUE

(43) Veröffentlichungstag der Anmeldung: 26.07.2023
(73) Patentinhaber: Leuze electronic GmbH + Co. KG, 73277 Owen/Teck (DE)
(72) Erfinder: Bortz, Jörg, 72805 Lichtenstein (DE); Feller, Bernhard, 86316 Friedberg (DE); Haberl, Paul, 80999 München (DE); Nützel, Florian, 93128 Regenstauf (DE); Gläser, Armin, 72639 Neuffen (DE)
(74) Vertreter: Ruckh, Rainer Gerhard

(56) Entgegenhaltungen:
- CN-A- 108 649 944
- JP-B2- 2 854 605
- US-A1- 2007 212 061
- US-A1- 2008 204 229

## Beschreibung

Die Erfindung betrifft einen optischen Sensor.

Derartige optische Sensoren werden generell zur Erfassung von Objekten in einem Überwachungsbereich eingesetzt.

In der einfachsten Ausführungsform weist der optische Sensor als Sensorkomponente nur einen Lichtstrahlen emittierenden Sender und einen Lichtstrahlen empfangenden Empfänger auf. Der optische Sensor kann dabei als Lichttaster, Distanzsensor, Reflexionslichtschranke und dergleichen ausgebildet sein, wobei bei diesen Ausführungsformen der Sender und der Empfänger in einem gemeinsamen Gehäuse integriert sind. Weiterhin kann der optische Sensor auch als Lichtschranke ausgebildet sein. In diesem Fall sind der Sender und Empfänger in separaten Gehäusen untergebracht.

Generell kann der optische Sensor auch mehrere Sender und/oder Empfänger aufweisen. Ein Beispiel für einen derartigen optischen Sensor ist ein Lichtvorhang.

Der Lichtvorhang umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern.

Der optische Sensor weist als Elektronikkomponente eine Auswerteeinheit auf, in welcher in Abhängigkeit von Empfangssignalen des oder der Empfänger ein Objektfeststellungssignal generiert wird. Dieses Objektfeststellungssignal kann insbesondere als binäres Schaltsignal ausgebildet sein, dessen Schaltzustände angeben, ob sich ein Objekt im Überwachungsbereich befindet oder nicht. Das Objektfeststellungssignal kann alternativ ein analoges Signal, beispielsweise ein Distanzwert sein.

Die Sensorkomponenten und die Elektronikkomponenten des optischen Sensors sind auf wenigstens einer Leiterplatte angeordnet. Die oder jede Leiterplatte ist in dem oder in einem Gehäuse des optischen Sensors untergebracht.

Die jeweilige Leiterplatte muss exakt in einer bestimmten Sollposition gelagert werden. Dabei muss diese Sollposition auch bei äußeren Umgebungseinflüssen, wie Schwingungs- oder Schockbelastungen, erhalten bleiben. Um dies zu erreichen, werden die Leiterplatten in den jeweiligen Gehäusen mit Befestigungsmitteln fixiert. Ein Beispiel hierfür sind Schraubverbindungen.

Diese Befestigungen erfordern den Einsatz von Werkzeugen und sind zudem zeitaufwändig.

Die US 2008 / 0204229 A1 betrifft einen mehrachsigen optischen Sensor, der zur Türüberwachung eingesetzt wird. Sensorkomponenten in Form von Lichtstrahlen emittierenden Sendern und Lichtstrahlen empfangenden Empfängern sowie Elektronikkomponenten sind auf Leiterplatten gelagert. Die Leiterplatten sind mit Endkappen in einem Gehäuse gelagert.

Die JP 2 854 602 B2 betrifft einen photoelektrischen Sensor. Sensor- und Elektronikkomponenten des Sensors sind auf einer Leiterplatte gelagert. Die Leiterplatte ist unter Zwischenlagerung von Harzmaterial in Nuten eines Gehäuses gelagert.

Die US 2007 / 021061 A1 betrifft ein Kameramodul, dessen Gehäuse auf einer Leiterplatte aufsitzt. Auf der Leiterplatte befindet sich ein Bildsensor.

Die CN 108 649 944 A1 betrifft einen elektronischen Berührungssensor. Eine Leiterplatte ist in Nuten eines Gehäuses gelagert.

Der Erfindung liegt die Aufgabe zugrunde, einen optischen Sensor der eingangs genannten Art, bereitzustellen, der eine hohe Funktionalität aufweist und der rationell und kostengünstig gefertigt werden kann.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten innerhalb eines Überwachungsbereichs, mit Sensorkomponenten und Elektronickomponenten. Die Sensor- und Elektronikkomponenten sind in wenigstens einem Gehäuse angeordnet, in welchem wenigstens eine Sensorkomponenten und/oder Elektronikkomponenten aufnehmende Leiterplatte gelagert ist. Die Leiterplatte ist unter Zwischenlagerung eines elastischen Materials in im Gehäuse angeordneten Nuten spielfrei gelagert. Das elastische Material ist in Form von in den Nuten und/oder der Leiterplatte gelagerten elastischen Elementen ausgebildet. An jedem ist in eine Nut einführbaren Rand der Leiterplatte ist wenigstens ein elastisches Element in Form eines Schienenelements befestigt. Die Ränder der Leiterplatte verlaufen parallel zueinander jeweils entlang einer Geraden, wobei in einem längsseitigen Endbereich der Leiterplatte an deren Rändern jeweils ein Schienenelement angeordnet ist. Die Längsachsen der Schienenelemente verlaufen geneigt zu den Rändern der Leiterplatte. Zur Einführung der Leiterplatte in den Bereich der Nuten ist die Leiterplatte schräg gestellt, so dass die Längsachsen der in den Nuten geführten Schienenelemente parallel zu den Längsachsen der Nuten verlaufen. Zur Fixierung der Leiterplatte wird diese in einer von den Nuten aufgespannten Ebene ausgerichtet, wodurch durch Verkanten der Schienenelemente in den Nuten die Leiterplatte lagegesichert ist. Die Breite der Leiterplatte verjüngt sich von ihrer Mitte zu den längsseitigen Enden hin kontinuierlich wobei die Leiterplatte zwei in deren mittelsymmetrische, sich konisch zu deren längsseitigen Enden verjüngende Abschnitte auf, weist, wobei an jedem konischen Abschnitt der Leiterplatte ein Schienenelement vorhanden ist. Die beiden Schienenelemente sind an gegenüberliegenden Rändern der Leiterplatte angeordnet, wobei das Einführen der Leiterplatte in die Nuten in einer ersten seitlichen Kippstellung der Leiterplatte erfolgt. Die Randbereiche der Leiterplatte sind ohne Schienenelemente in den Nuten geführt. Die Leiterplatte wird dadurch in den Nuten lagefixiert, dass die Leiterplatte seitlich in eine zweite Kippstellung gekippt wird, in welcher die Schienenelemente in Eingriff mit den Nuten sind.

Der erfindungsgemäße optische Sensor kann als Sensorkomponenten generell nur einen Sender und nur einen Empfänger aufweisen, wobei dann der optische Sensor als Lichtschranke, Reflexionslichtschranke, Lichttaster, Distanzsensor oder dergleichen ausgebildet sein kann. Der optische Sensor kann auch eine Mehrfachanordnung von Sendern und/oder Empfängern aufweisen. Insbesondere kann der optische Sensor als Lichtvorhang ausgebildet sein.

Die Funktionsweise des optischen Sensors ist generell derart, dass der optische Sensor als Elektronikkomponente eine Auswerteeinheit aufweist, in der abhängig von Empfangssignalen des oder der Empfänger ein Objektfeststellungssignal generiert, welches angibt, ob ein Objekt im Überwachungsbereich vorhanden ist.

Der optische Sensor kann generell als Sicherheitssensor ausgebildet sein. Für den Einsatz im Bereich der Sicherheitstechnik weist dieser einen fehlersicheren Aufbau auf, was beispielsweise durch eine zweikanalige Auswerteeinheit realisiert wird.

Durch die erfindungsgemäße Zwischenlagerung eines elastischen Materials zwischen dem Rand der Leiterplatte und der oder jeder zugeordneten Nut wird eine positionssichere stabile Lagerung der Leiterplatte in der oder in den Nuten erhalten. Die Leiterplatte ist mittels des elastischen Materials spielfrei in den Nuten gelagert, wobei die Lagerung der Leiterplatte an ihrer Sollposition auch bei äußeren Störeinflüssen, wie Schock- oder Schwingungsbelastungen erhalten bleibt.

Dabei ist besonders vorteilhaft, dass das elastische Material eine Schwingungs- und Schockdämpfung bewirkt.

Dadurch werden auch auf der Leiterplatte gelagerte elektronische Bauteile gegen Schock- und Schwingungsbelastungen geschützt.

Unempfindlichkeit gegen Schock- und Schwingungsbelastungen ist insbesondere bei als Sicherheitssensor ausgebildeten optischen Sensoren von Bedeutung, da diese strenge Anforderungen an die Unempfindlichkeit gegen derartige Belastungen erfüllen müssen.

Ein weiterer wesentlicher Vorteil der Erfindung besteht darin, dass die Leiterplatten werkzeuglos in den jeweiligen Aufnahmen fixiert werden können. Dadurch wird eine einfache und schnelle Montage des optischen Sensors ermöglicht.

Da die Leiterplatte unter Zwischenlagerung des elastischen Materials in den Nuten gelagert ist, entsteht auch kein Abrieb der Leiterplatte, der bei einer direkten Lagerung der Leiterplatte in den Nuten vorhanden wäre, insbesondere dann, wenn die Nuten aus metallischen Werkstoffen wie Aluminium bestehen.

Weiter ist vorteilhaft, dass das elastische Material eine Isolierung der Leiterplatte gegenüber dem Gehäuse bewirkt.

Gemäß einer vorteilhaften Ausführungsform ist das elastische Material ein Kunststoff.

Dabei wird als elastisches Material ein Kunststoff gewählt, der mechanisch verformbar ist. Insbesondere ist das elastische Material ein Elastomer.

Erfindungsgemäß ist das elastische Material in Form von in den Nuten und/oder der Leiterplatte gelagerten elastischen Elementen ausgebildet.

Die elastischen Elemente bilden Formteile, die an die Konturen der Nuten angepasst sind.

Vorteilhaft sind die elastischen Elemente durch Klemm-, Rast- oder Clips-Mittel an der Leiterplatte oder an den Nuten befestigbar.

Somit ist eine werkzeuglose Befestigungsmöglichkeit der elastischen Elemente gegeben.

Die elastischen Elemente können unterschiedliche Geometrien und Ausdehnungen entlang der Leiterplatte aufweisen. Prinzipiell können die elastischen Elemente polygonal oder kreiszylindrisch ausgebildet sein.

Gemäß einer besonders vorteilhaften Ausgestaltung ist an jedem in eine Nut einführbaren Rand der Leiterplatte ein elastisches Element in Form einer Schiene befestigt.

Zweckmäßig erstreckt sich jede Schiene zumindest näherungsweise über die gesamte Länge des Randes der Leiterplatte.

Die Außenkonturen der Schienen sind an die Innenkonturen der Nuten angepasst, wodurch eine spielfreie Lagerung der Leiterplatte in den Nuten gewährleistet ist.

Gemäß einer ersten Variante der Erfindung ist an jedem in eine Nut einführbaren Rand der Leiterplatte wenigstens ein elastisches Element in Form eines Schienenelements befestigt.

Dabei ist die Länge des Schienenelements signifikant kleiner als die Länge des Randes der Leiterplatte.

Auch die Schienenelemente sind an die Nutenkontur angepasst.

Gemäß einer konstruktiv vorteilhaften Ausgestaltung ist das oder jedes Schienenelement in einer am Rand der Leiterplatte ausmündenden Aussparung gelagert.

Damit wird ein besonders guter Halt des Schienenelements an der Leiterplatte gewährleistet. Zudem kann ein geringer Überstand des Schienenelements über den Rand der Leiterplatte realisiert werden.

Vorteilhaft verlaufen die Nuten jeweils einer Geraden, wobei die Geraden parallel zueinander verlaufen.

Die gegenüberliegend in einer Ebene angeordneten Nuten sorgen für einen beidseitigen Halt an gegenüberliegenden längsseitigen Rändern der Leiterplatte.

Die Ränder der Leiterplatte verlaufen parallel zueinander jeweils entlang einer Geraden.

Zweckmäßig können daran angepasst die Längsachsen der Schienen parallel zu den Rändern der Leiterplatte verlaufen.

In einem längsseitigen Endbereich der Leiterplatte ist an deren Rändern jeweils ein Schienenelement angeordnet, wobei die Längsachsen der Schienenelemente geneigt zu den Rändern der Leiterplatte verlaufen.

Dabei ist zur Einführung der Leiterplatte in den Bereich der Nuten die Leiterplatte schräg gestellt, so dass die Längsachsen der in den Nuten geführten Schienenelemente parallel zu den Längsachsen der Nuten verlaufen. Zur Fixierung der Leiterplatte wird diese in einer von den Nuten aufgespannten Ebene ausgerichtet, wodurch durch Verkanten der Schienenelemente in den Nuten die Leiterplatte lagegesichert ist.

In diesem Fall können die Außenkonturen der Schienenelemente so auf die Innenkonturen der Nuten abgestimmt sein, dass dann, wenn die Längsachsen der Schienenelemente in Richtung der Längsachsen der Nuten verlaufen, die Schienenelemente mit geringem Spiel in den Nuten geführt sind. Damit können bei Einführen der Leiterplatte in den Bereich der Nuten die Schienenelemente nahezu reibungsfrei in den Nuten geführt sein.

Erst dann, wenn die Leiterplatte ihre Sollposition relativ zu den Nuten erreicht hat und die Leiterplatte in die Ebene der Nuten gekippt wird, verkanten die Schienenelemente in den Nuten. Durch dieses Verklemmen sind die Schienenelemente in den Nuten und damit auch die Leiterplatten lagegesichert.

Gemäß einer weiteren Alternative der Erfindung verjüngt sich die Breite der Leiterplatte von ihrer Mitte zu den längsseitigen Enden hin kontinuierlich.

Somit weist die Leiterplatte zwei zu deren Mittenebene symmetrische, sich konisch zu deren längsseitigen Enden verjüngende Abschnitte auf.

In diesem Fall ist an jedem konischen Abschnitt der Leiterplatte ein Schienenelement vorhanden, wobei die beiden Schienenelemente an gegenüberliegenden Rändern der Leiterplatte angeordnet sind.

Dann erfolgt das Einführen der Leiterlatte in die Nuten in einer ersten seitlichen Kippstellung der Leiterplatte, in welcher die Randbereiche der Leiterplatte ohne Schienenelemente in den Nuten geführt sind.

Anschließend wird die Leiterplatte dadurch in den Nuten lagefixiert, dass die Leiterplatte seitlich in eine zweite Kippstellung gekippt wird, in welche die Schienenelemente in Eingriff mit den Nuten sind.

In der ersten Kippstellung sind die Schienenelemente außer Eingriff mit den Nuten. Vielmehr sind nur Leiterplatten-Abschnitte ohne Schienenelemente in den Nuten geführt. Damit kann das Einführen der Leiterplatte in den Bereich der Nuten nahezu ohne Reibungskräfte erfolgen, da die Leiterplatten-Ränder mit Spiel in den Nuten geführt sind.

Um die Leiterplatte in ihrer Sollposition zu fixieren, muss diese nur von der ersten in die zweite Kippstellung gekippt werden. Dadurch werden die Schienenelemente in Eingriff mit den Nuten gebracht.

Die Erfindung wird im Folgenden anhand der Zeichnungen erläutert. Es zeigen:
- Figur 1:: Ausführungsbeispiel des erfindungsgemäßen optischen Sensors in Form eines Lichtvorhangs.
- Figur 2:: Schnittdarstellung eines Gehäuses des Lichtvorhangs gemäß Figur 1 mit einer Leiterplatte, die in Nuten des Gehäuses unter Zwischenlagerung eines elektrischen Materials gelagert ist.
- Figur 3:: Ausführungsbeispiel einer aus elektrischem Material bestehenden Schiene an der Leiterplatte.
- Figur 4:: Ausführungsbeispiel eines aus elektrischem Material bestehenden Schienenelement an der Leiterplatte.
- Figur 5:: Ausführungsbeispiel eines keilförmigen aus elektrischem Material bestehenden Schienenelement an der Leiterplatte.
a) Draufsicht
b) Schnittdarstellung
- Figur 6:: Ausführungsbeispiel eines aus elektrischem Material bestehenden kreiszylindrischen Elements an der Leiterplatte.
a) Draufsicht
b) Schnittdarstellung
- Figur 7:: Ausführungsbeispiel eines schräg an der Leiterplatte montierten, aus elektrischem Material bestehenden Schienenelement
a) bei Einführen in eine Nut.
b) nach Verklemmen in der Nut.
- Figur 8:: Ausführungsbeispiel einer Leiterplatte mit zwei konischen Abschnitten und zwei an dieser befestigten Schienenelement
a) bei Einführen der Leiterplatte in Nuten.
b) nach Verklemmen der Schienenelemente in den Nuten.
- Figur 9a:: Schnittdarstellung der Anordnung gemäß Figur 8a.
- Figur 9b:: Schnittdarstellung der Anordnung gemäß Figur 8b.

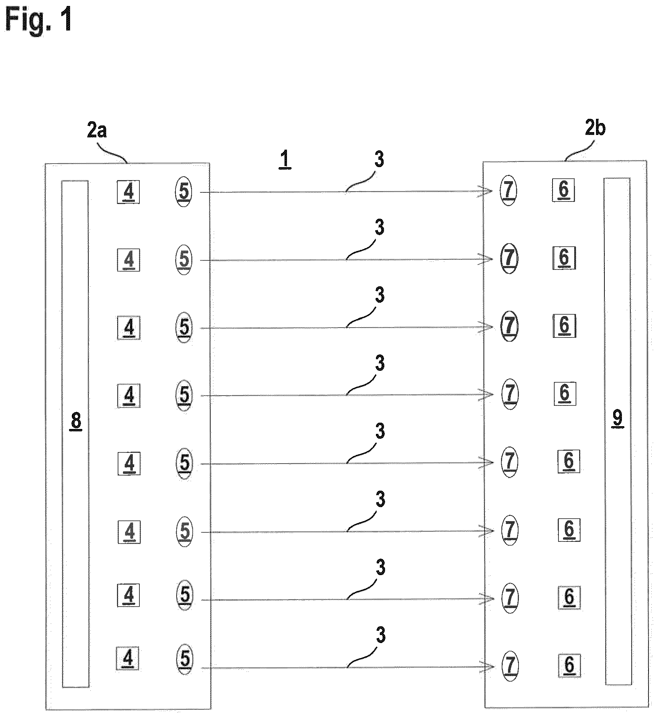

Figur 1 zeigt schematisch den Aufbau eines Ausführungsbeispiels des erfindungsgemäßen optischen Sensors in Form eines Lichtvorhangs 1 zur Erfassung von Objekten innerhalb eines Überwachungsbereichs.

Der Lichtvorhang 1 weist eine Sendereinheit mit einem Gehäuse 2a mit einer Reihenanordnung von Lichtstrahlen 3 emittierenden Sendern 4 und diesen zugeordneten Optikelemente bildenden Sendeoptiken 5 auf. Weiterhin weist der Lichtvorhang 1 eine Empfängereinheit mit einem zweiten Gehäuse 2b mit einer Reihenanordnung von Lichtstrahlen 3 empfangenden Empfängern 6 auf, welchen jeweils ein Optikelement in Form einer Empfangsoptik 7 vorgeordnet ist.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall sind acht Strahlachsen vorgesehen. Natürlich kann der Lichtvorhang 1 auch eine andere Zahl von Strahlachsen aufweisen.

Alternativ kann der Lichtvorhang 1 auch als Reflexions-Lichtvorhang 1 ausgebildet sein. Dann sind alle Sender 4 und Empfänger 6 in einem Gehäuse 2a oder 2b angeordnet, welche an einem Rand des Überwachungsbereichs angeordnet ist. Am anderen Ende befindet sich ein Reflektor. Bei freiem Überwachungsbereich werden die Lichtstrahlen 3 der Sender 4 über den Reflektor zurück zum jeweils zugeordneten Empfänger 6 geführt.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang 1 einen Sicherheitssensor bildet.

Die Sender 4 und Empfänger 6 bilden Sensorkomponenten des optischen Sensors. Die Sendersteuerung 8 und die Auswerteeinheit 9 bilden Elektronikkomponenten des optischen Sensors. Die Sensorkomponenten und Elektronikkomponenten sind auf die Leiterplatte 10 angeordnet, die erfindungsgemäß in Aufnahmen der Gehäuse 2a oder 2b spielfrei gelagert sind.

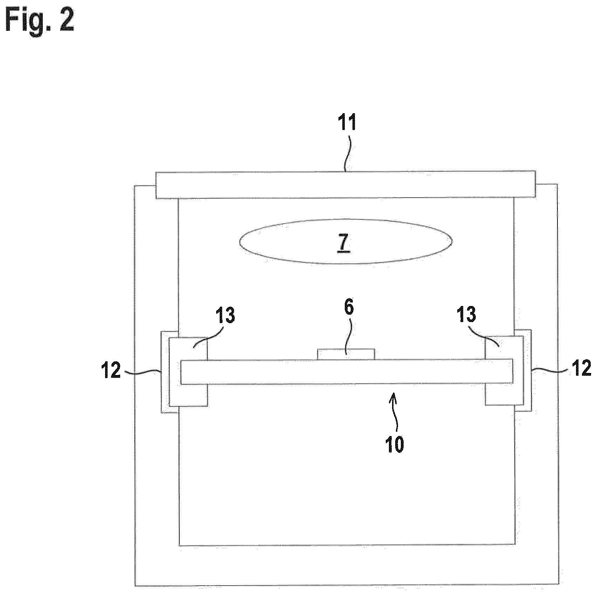

Figur 2 zeigt eine Schnittdarstellung des Gehäuses 2b, wobei der dort gezeigte Aufbau auch im Gehäuse 2a vorhanden ist.

Die Leiterplatte 10, die im vorliegenden Fall eine rechteckige Kontur aufweist, ist so im Gehäuse 2b untergebracht, dass deren Längsachse mit der Längsachse des Gehäuses 2b zusammenfällt.

Figur 2 zeigt einen auf der Leiterplatte 10 angeordneten Empfänger 6, dem eine Empfangsoptik 7 vorgeordnet ist. Die Empfangsoptik 7 befindet sich hinter einer transparenten Scheibe 11, die die offene Vorderseite des Gehäuses 2b abschließt.

Als Aufnahme für die Leiterplatte 10 sind in den Seitenwänden des Gehäuses 2a oder 2b Nuten 12 vorgesehen. In jeder Seitenwand befindet sich eine Nut 12. Die identisch ausgebildeten Nuten 12 verlaufen parallel zueinander in einer horizontalen Ebene und erstrecken sich in Richtung der Längsachse des Gehäuses 2a oder 2b. Die Nuten 12 weisen eine rechteckige Kontur auf, die über die Länge der jeweiligen Nut 12 konstant ist. Diese Anordnung der Nuten 12 ist auch für alle weiteren Ausführungsbeispiele gegeben.

Erfindungsgemäß ist die Leiterplatte 10 unter Zwischenlagerung eines elastischen Materials in den Nuten 12 gelagert. Dadurch wird eine spielfreie, schock- und schwingungsdämpfende Lagerung der Leiterplatte 10 erhalten. Zudem wird mit dem elastischen Material eine elektrisch isolierende Wirkung erzielt. Das elastische Material besteht aus einem elastisch verformbaren Kunststoff, insbesondere einem Elastomer.

Im vorliegenden Fall besteht das elastische Material aus Schienen 13, die auf den Rändern durch Klemm-, Rast- oder Clips-Mitteln fixiert sind.

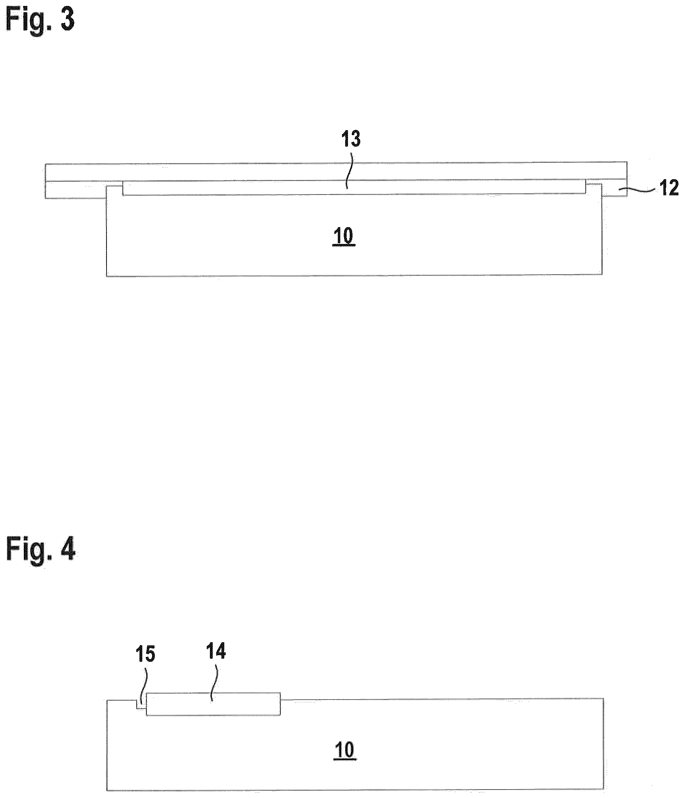

Eine derartige, an einem Rand der Leiterplatte 10 verlaufende Schiene 13 ist in Figur 3 dargestellt. Wie Figur 3 zeigt, erstreckt sich die Schiene 13 nahezu über die gesamte Länge der Leiterplatte 10. Dasselbe gilt für die in Figur 3 nicht dargestellte gegenüberliegende Schiene 13. Die Längsachsen der Schienen 13 verlaufen parallel zu den Rändern der Leiterplatte 10, die wiederum parallel zu den Längsachsen der Nuten 12 verlaufen. Die Schienen 13 weisen eine rechteckige Außenkontur auf, die an die Innenkonturen der Nuten 12 angepasst sind, so dass durch Einpressen der Schienen 13 in die Nuten 12 eine spielfreie Lagerung der Leiterplatte 10 gegeben ist.

Figur 4 zeigt eine Variante der Ausführungsform der Figur 3. In diesem Fall ist ein Schienenelement 14 am Rand der Leiterplatte 10 gelagert. Dessen Länge signifikant kleiner ist als die Länge der Leiterplatte 10. Generell können mehrere in Abstand zueinander angeordnete Schienenelemente 14 am Rand der Leiterplatte 10 befestigt sein. Wie Figur 4 zeigt, ist das oder jedes Schienenelement 14 in einer Aussparung 15 der Leiterplatte 10 so gelagert, dass das Schienenelement 14 etwas über den Rand der Leiterplatte 10 hervorsteht, so dass es in der jeweiligen Nut 12 festgeklemmt werden kann. Die Längsachse des oder jedes Schienenelements 14 verläuft parallel zum Rand der Leiterplatte 10. Das oder jedes Schienenelement 14 weist eine rechteckige Außenkontur auf.

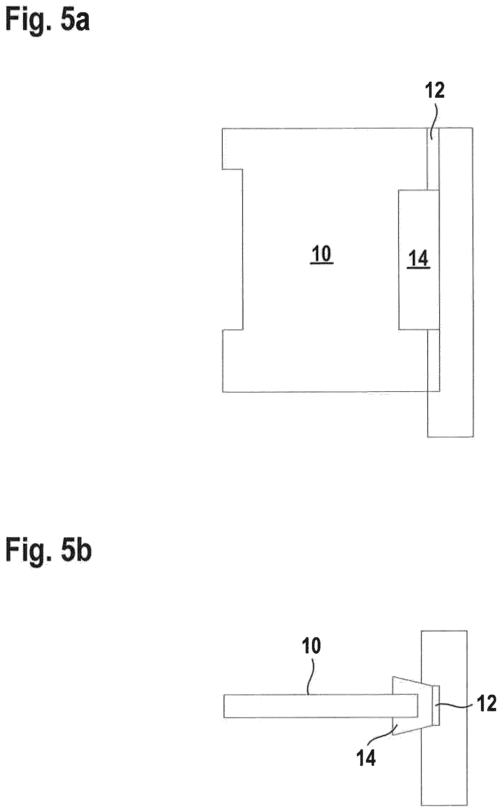

Die Figuren 5a, 5b zeigen eine Variante der Ausführungsform gemäß Figur 4. Die Ausführungsform der Figuren 5a, 5b unterscheidet sich von der Ausführungsform gemäß Figur 4 dadurch, dass das oder die Schienenelemente 14 einen keilförmigen Querschnitt aufweisen, was eine verbesserte Klemmung in der Nut 12 und dadurch eine verbesserte Dämpfungswirkung bewirkt. Keilförmige Querschnitte können natürlich auch bei den Schienen 13 gemäß Figur 3 vorgesehen sein.

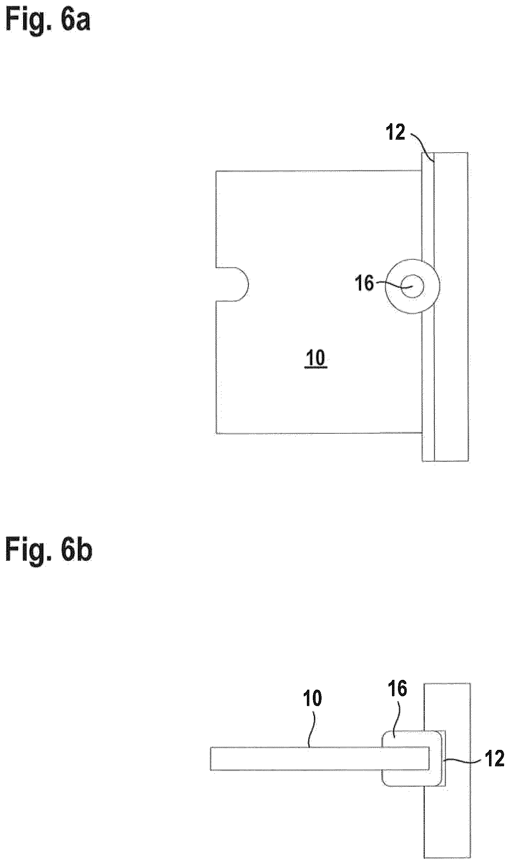

Die Figuren 6a, 6b zeigen ein Ausführungsbeispiel, bei dem ein aus elastischem Material bestehendes elastisches Element von einem Segment einer Kabelschlauchführung 16 gebildet ist, die am Rand der Leiterplatte 10 gelagert ist.

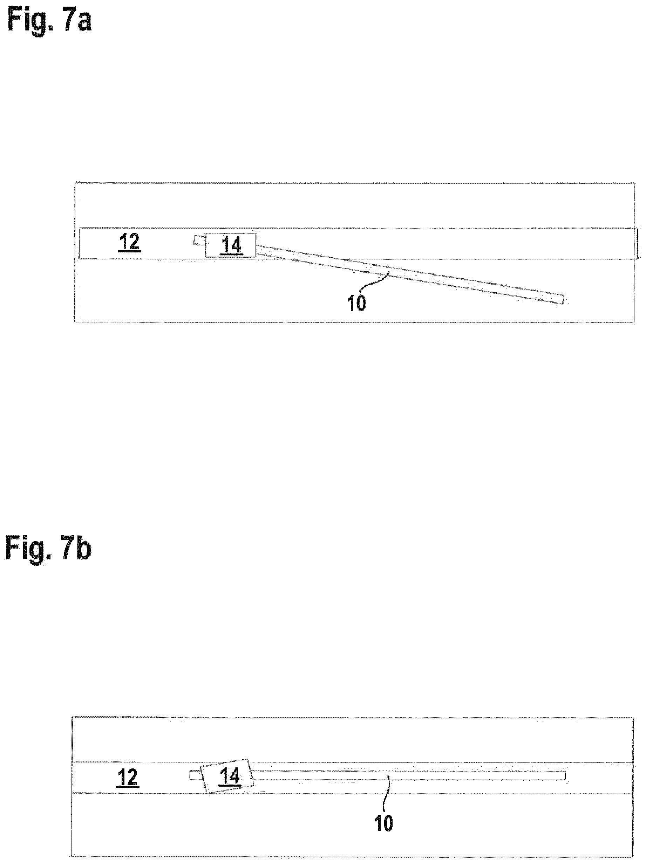

Die Figuren 7a, 7b zeigen ein weiteres Ausführungsbeispiel der erfindungsgemäßen Lagerung der Leiterplatte 10 in den Nuten 12.

Im Bereich eines längsseitigen Endes der Leiterplatte 10 ist an jedem Rand der Leiterplatte 10 ein Schienenelement 14 befestigt, wobei Größe und Anordnung an der Leiterplatte 10 für beide Schienenelemente 14 identisch sind.

Wie die Figur 7a, 7b zeigen sind diese Schienenelemente 14 so an der Leiterplatte 10 befestigt, dass deren Längsachsen schräg, d. h. geneigt zum Rand der Leiterplatte 10 verlaufen. Die Breiten der Schienenelemente 14 sind etwas kleiner als die Breite der Nuten 12, so dass die Schienenelemente 14 reibungsarm und mit etwas Spiel in der jeweiligen Nut 12 geführt sind, wenn die Längsachse des jeweiligen Schienenelements 14 mit der Längsachse der Nut 12 zusammenfällt.

Figur 7a zeigt das Einführen der Leiterplatte 10 in den Bereich der Nuten 12. Die Leiterplatte 10 ist dabei so schräg gestellt, dass die Längsachsen der in den Nuten 12 geführten Schienenelemente 14 mit den Längsachsen der Nuten 12 zusammenfallen. Da somit die Schienenelemente 14 reibungsarm in den Nuten 12 geführt sind, kann die Leiterplatte 10 leicht in den Bereich der Nuten 12 eingeschoben werden.

Ist die Leiterplatte 10 in ihre Sollposition eingeschoben, wird die Leiterplatte 10 gekippt, so dass die Leiterplattenabschnitte 17a, 17b in der Ebene der Nuten 12 liegen, wie in Figur 7b dargestellt. Dadurch werden die Schienenelemente 14 in den Nuten 12 schräg gestellt und werden so in den Nuten 12 festgeklemmt, wie Figur 7b zeigt. Diese Position kann dadurch fixiert werden, dass das dem Schienenelement 14 abgewandte Ende der Leiterplatte 10 an einem Gehäusedeckel befestigt wird.

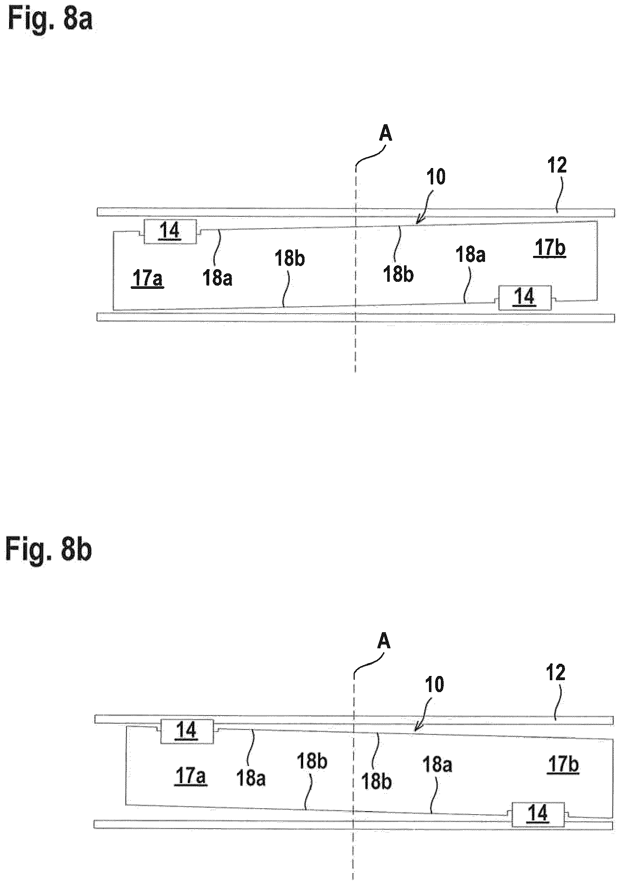

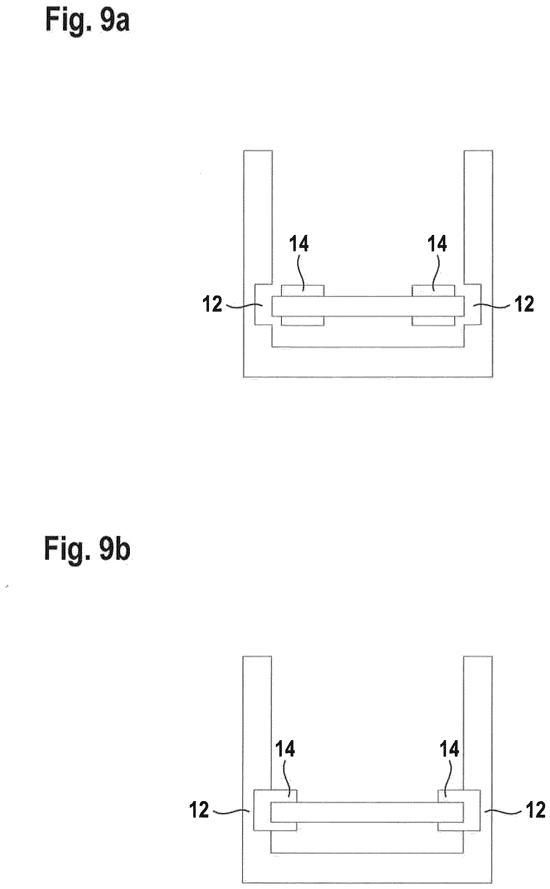

Die Figuren 8a, 8b und 9a, 9b zeigen ein weiteres Ausführungsbeispiel der erfindungsgemäßen Lagerung der Leiterplatte 10 in den Nuten 12.

Bei dieser Ausführungsform weist die Leiterplatte 10 keine rechteckige Außenkontur auf. Vielmehr weist die Leiterplatte 10 zwei Leiterplattenabschnitte 17a, 17b auf, die drehsymmetrisch zu einem Drehpunkt im Zentrum der Leiterplatte 10 angeordnet sind, wobei der Drehpunkt in der Mittelebene A der Leiterplatte 10 liegt.

Darüber hinaus können die Leiterplattenabschnitte 17a, 17b zum längsseitigen Ende der Leiterplatte 10 hin konisch geformt sein (nicht gezeigt).

An den gegenüberliegend an der Leiterplatte 10 angeordneten Randsegmenten 18a der Leiterplattenabschnitte 17a, 17b ist jeweils ein Schienenelement 14 in einer Aussparung 15 gelagert.

Bei Einführen der Leiterplatte 10 in den Bereich der Nuten 12 liegen nur die Randsegmente 18b ohne Schienenelemente 14 in den Nuten 12, wie in den Figuren 8a, 9a dargestellt. Da die Leiterplatte 10 mit Spiel in den Nuten 12 liegt, kann die Leiterplatte 10 reibungsarm in den Bereich der Nuten 12 eingeschoben werden.

Zum Fixieren der Leiterplatte 10 in den Nuten 12 wird die Leiterplatte 10 in der Ebene der Nuten 12 um den Drehpunkt gedreht, so dass nur die Schienenelemente 14 im Eingriff mit den Nuten 12 sind (Figuren 8b, 9b). Dadurch ist die Leiterplatte 10 in den Nuten 12 lagefixiert.

Leuze electronic GmbH + Co. KG

73277 Owen/Teck

### Bezugszeichenliste

- (1): Lichtvorhang
- (2a): Gehäuse
- (2b): Gehäuse
- (3): Lichtstrahl
- (4): Sender
- (5): Sendeoptik
- (6): Empfänger
- (7): Empfangsoptik
- (8): Sendersteuerung
- (9): Auswerteeinheit
- (10): Leiterplatte
- (11): Scheibe
- (12): Nut
- (13): Schiene
- (14): Schienenelement
- (15): Aussparung
- (16): Kabelschlauchführung
- (17a): Leiterplattenabschnitt
- (17b): Leiterplattenabschnitt
- (18a): Randsegment mit Schienenelement
- (18b): Randsegment ohne Schienenelement

## Patentansprüche

1. Optischer Sensor zur Erfassung von Objekten innerhalb eines Überwachungsbereichs, mit Sensorkomponenten und Elektronikkomponenten, welche in wenigstens einem Gehäuse (2a oder 2b) angeordnet sind, in welchem wenigstens eine Sensorkomponenten und/oder Elektronikkomponenten aufnehmende Leiterplatte (10) gelagert ist, wobei die Leiterplatte (10) unter Zwischenlagerung eines elastischen Materials in im Gehäuse (2a oder 2b) angeordneten Nuten (12) spielfrei gelagert ist, und wobei das elastische Material in Form von in den Nuten (12) und/oder der Leiterplatte (10) gelagerten elastischen Elementen ausgebildet ist, **dadurch gekennzeichnet, dass** an jedem in eine Nut (12) einführbaren Rand der Leiterplatte (10) wenigstens ein elastisches Element in Form eines Schienenelements (14) befestigt ist, wobei die Ränder der Leiterplatte (10) parallel zueinander jeweils entlang einer Geraden verlaufen, wobei in einem längsseitigen Endbereich der Leiterplatte (10) an deren Rändern jeweils ein Schienenelement (14) angeordnet ist, wobei die Längsachsen der Schienenelemente (14) geneigt zu den Rändern der Leiterplatte (10) verlaufen, wobei zur Einführung der Leiterplatte (10) in den Bereich der Nuten (12) die Leiterplatte (10) schräg gestellt ist, so dass die Längsachsen der in den Nuten (12) geführten Schienenelemente (14) parallel zu den Längsachsen der Nuten (12) verlaufen, und wobei zur Fixierung der Leiterplatte (10) diese in einer von den Nuten (12) aufgespannten Ebene ausgerichtet wird, wodurch durch Verkanten der Schienenelemente (14) in den Nuten (12) die Leiterplatte (10) lagegesichert ist oder, dass sich die Breite der Leiterplatte (10) von ihrer Mitte zu den längsseitigen Enden hin kontinuierlich verjüngt, wobei die Leiterplatte (10) zwei zu der Mittenebene symmetrische, sich konisch zu deren längsseitigen Enden verjüngende Abschnitte aufweist, wobei an jedem konischen Abschnitt der Leiterplatte (10) ein Schienenelement (14) vorhanden ist, wobei die beiden Schienenelemente (14) an gegenüberliegenden Rändern der Leiterplatte (10) angeordnet sind, wobei das Einführen der Leiterplatte (10) in die Nuten (12) in einer ersten seitlichen Kippstellung der Leiterplatte (10) erfolgt, in welcher die Randbereiche der Leiterplatte (10) ohne Schienenelemente (14) in den Nuten (12) geführt sind, und wobei die Leiterplatte (10) dadurch in den Nuten (12) lagefixiert wird, dass die Leiterplatte (10) seitlich in eine zweite Kippstellung gekippt wird, in welche die Schienenelemente (14) in Eingriff mit den Nuten (12) sind.

2. Optischer Sensor nach Anspruch 1, **dadurch gekennzeichnet, dass** das elastische Material eine Schwingungs- und Schockdämpfung bewirkt.

3. Optischer Sensor nach Anspruch 1, **dadurch gekennzeichnet, dass** das elastische Material ein Kunststoff ist.

4. Optischer Sensor nach einem der Ansprüche 1 bis 3, **dadurch gekennzeichnet, dass** das elastische Material ein Elastomer ist.

5. Optischer Sensor nach einem der Ansprüche 1 bis 4, **dadurch gekennzeichnet, dass** das elastische Material eine elektrische Isolierung der Leiterplatte (10) gegenüber dem Gehäuse 2a oder 2b bewirkt.

6. Optischer Sensor nach Anspruch 5, **dadurch gekennzeichnet, dass** die elastischen Elemente durch Klemm-, Rast- oder Clips-Mittel an der Leiterplatte (10) oder an den Nuten (12) befestigbar sind.

7. Optischer Sensor nach einem der Ansprüche 5 oder 6, **dadurch gekennzeichnet, dass** an jedem in eine Nut (12) einführbaren Rand der Leiterplatte (10) ein elastisches Element in Form einer Schiene (13) befestigt ist.

8. Optischer Sensor nach Anspruch 7, **dadurch gekennzeichnet, dass** sich jede Schiene (13) zumindest näherungsweise über die gesamte Länge des Randes der Leiterplatte (10) erstreckt.

9. Optischer Sensor nach einem der Ansprüche 1 bis 8, **dadurch gekennzeichnet, dass** die Länge des Schienenelements (14) signifikant kleiner ist als die Länge des Randes der Leiterplatte (10).

10. Optischer Sensor nach einem der Ansprüche 1 bis 9, **dadurch gekennzeichnet, dass** das oder jedes Schienenelement (14) in einer am Rand der Leiterplatte (10) ausmündenden Aussparung (15) gelagert ist.

11. Optischer Sensor nach einem der Ansprüche 1 bis 10, **dadurch gekennzeichnet, dass** die Nuten (12) jeweils entlang einer Geraden verlaufen, wobei die Geraden parallel zueinander verlaufen.

12. Optischer Sensor nach Anspruch 7, **dadurch gekennzeichnet, dass** die Längsachsen der Schienen (13) parallel zu den Rändern der Leiterplatte (10) verlaufen.

13. Optischer Sensor nach einem der Ansprüche 1 bis 12, **dadurch gekennzeichnet, dass** die Längsachsen der Schienenelemente (14) parallel zu den Rändern der Leiterplatte (10) verlaufen.

14. Optischer Sensor nach einem der Ansprüche 1 bis 13, **dadurch gekennzeichnet, dass** dieser ein Sicherheitssensor ist.

## Claims

1. An optical sensor for detecting objects within a monitoring area, having sensor components and electronic components which are arranged in at least one housing (2a or 2b) in which at least one printed circuit board (10) accommodating sensor components and/or electronic components is mounted,
wherein the printed circuit board (10) is mounted without play in grooves (12) arranged in the housing (2a or 2b) with intermediate storage of an elastic material, and
wherein the elastic material is in the form of elastic elements mounted in the grooves (12) and/or the printed circuit board (10),
**characterised in that** at least one elastic element in the form of a rail element (14) is attached to each edge of the printed circuit board (10) which can be inserted into a groove (12),
wherein the edges of the printed circuit board (10) each extend parallel to one another along a straight line,
wherein a respective rail element (14) is arranged in a longitudinal end region of the printed circuit board (10) at the edges thereof,
wherein the longitudinal axes of the rail elements (14) run inclined to the edges of the printed circuit board (10),
the printed circuit board (10) being inclined for insertion of the printed circuit board (10) into the region of the grooves (12), so that the longitudinal axes of the rail elements (14) guided in the grooves (12) run parallel to the longitudinal axes of the grooves (12), and
wherein the printed circuit board (10) is aligned in a plane spanned by the grooves (12) in order to fix it, whereby the position of the printed circuit board (10) is secured by tilting the rail elements (14) in the grooves (12), or
**in that** the width of the printed circuit board (10) tapers continuously from its centre towards the longitudinal ends, the printed circuit board (10) having two sections which are symmetrical with respect to the central plane and taper conically towards its longitudinal end, a rail element (14) being present on each conical section of the printed circuit board (10),
wherein the two rail elements (14) are arranged at opposite edges of the printed circuit board (10),
the printed circuit board (10) being inserted into the grooves (12) in a first lateral tilted position of the printed circuit board (10), in which the edge regions of the printed circuit board (10) are guided in the grooves (12) without rail elements (14), and
wherein the printed circuit board (10) is fixed in position in the grooves (12) **in that** the printed circuit board (10) is tilted laterally into a second tilted position in which the rail elements (14) are in engagement with the grooves (12).

2. An optical sensor according to claim 1, **characterised in that** the elastic material provides vibration and shock damping.

3. An optical sensor according to claim 1, **characterised in that** the elastic material is a plastic.

4. An optical sensor according to one of claims 1 to 3, **characterised in that** the elastic material is an elastomer.

5. An optical sensor according to one of claims 1 to 4, **characterised in that** the elastic material provides electrical insulation of the printed circuit board (10) with respect to the housing 2a or 2b.

6. An optical sensor according to claim 5, **characterised in that** the elastic elements can be fastened to the printed circuit board (10) or to the grooves (12) by clamping, latching or clip means.

7. An optical sensor according to one of claims 5 or 6, **characterised in that** an elastic element in the form of a rail (13) is attached to each edge of the printed circuit board (10) that can be inserted into a groove (12).

8. An optical sensor according to claim 7, **characterised in that** each rail (13) extends at least approximately over the entire length of the edge of the printed circuit board (10).

9. An optical sensor according to one of claims 1 to 8, **characterised in that** the length of the rail element (14) is significantly smaller than the length of the edge of the printed circuit board (10).

10. An optical sensor according to one of claims 1 to 9, **characterised in that** the or each rail element (14) is mounted in a recess (15) opening out at the edge of the printed circuit board (10).

11. An optical sensor according to one of claims 1 to 10, **characterised in that** the grooves (12) each run along a straight line, the straight lines running parallel to one another.

12. An optical sensor according to claim 7, **characterised in that** the longitudinal axes of the rails (13) run parallel to the edges of the printed circuit board (10).

13. An optical sensor according to one of claims 1 to 12, **characterised in that** the longitudinal axes of the rail elements (14) run parallel to the edges of the printed circuit board (10).

14. An optical sensor according to one of claims 1 to 13, **characterised in that** this is a safety sensor.

## Revendications

1. Capteur optique pour la détection d'objets dans une zone de surveillance, comportant des composants de capteurs et des composants électroniques qui sont disposés dans au moins un boîtier (2a ou 2b) dans lequel est montée au moins une carte de circuit imprimé (10) accueillant des composants de capteurs et/ou des composants électroniques,
dans lequel le circuit imprimé (10) est monté sans jeu dans des rainures (12) disposées dans le boîtier (2a ou 2b) avec un stockage intermédiaire d'un matériau élastique, et
dans lequel le matériau élastique se présente sous la forme d'éléments élastiques montés dans les rainures (12) et/ou la carte de circuit imprimé (10),
**caractérisé en ce qu'**au moins un élément élastique sous forme d'élément de rail (14) est fixé à chaque bord du circuit imprimé (10) qui peut être inséré dans une rainure (12),
dans lequel les bords de la carte de circuit imprimé (10) s'étendent chacun parallèlement l'un à l'autre le long d'une ligne droite,
dans lequel un élément de rail respectif (14) est disposé dans une zone d'extrémité longitudinale de la carte de circuit imprimé (10) au niveau de ses bords,
les axes longitudinaux des éléments de rail (14) étant inclinés par rapport aux bords de la carte de circuit imprimé (10),
le circuit imprimé (10) étant incliné pour l'insertion du circuit imprimé (10) dans la zone des rainures (12), de sorte que les axes longitudinaux des éléments de rail (14) guidés dans les rainures (12) sont parallèles aux axes longitudinaux des rainures (12) et que le circuit imprimé (10) est incliné pour l'insertion du circuit imprimé (10) dans la zone des rainures (12).
dans lequel le circuit imprimé (10) est aligné dans un plan traversé par les rainures (12) afin de le fixer, la position du circuit imprimé (10) étant assurée par l'inclinaison des éléments de rail (14) dans les rainures (12), ou bien
**en ce que** la largeur de la carte de circuit imprimé (10) s'amenuise continuellement de son centre vers les extrémités longitudinales, la carte de circuit imprimé (10) ayant deux sections symétriques par rapport au plan central et s'amincissant de façon conique vers son extrémité longitudinale, un élément de rail (14) étant présent sur chaque section conique de la carte de circuit imprimé (10),
les deux éléments de rail (14) étant disposés sur les bords opposés de la carte de circuit imprimé (10),
le circuit imprimé (10) étant inséré dans les rainures (12) dans une première position latérale inclinée du circuit imprimé (10), dans laquelle les zones de bord du circuit imprimé (10) sont guidées dans les rainures (12) sans éléments de rail (14), et.
dans laquelle le circuit imprimé (10) est fixé en position dans les rainures (12) dans la mesure où le circuit imprimé (10) est incliné latéralement dans une deuxième position inclinée dans laquelle les éléments de rail (14) sont en prise avec les rainures (12).

2. Capteur optique selon la revendication 1, **caractérisé en ce que** le matériau élastique assure l'amortissement des vibrations et des chocs.

3. Capteur optique selon la revendication 1, **caractérisé en ce que** le matériau élastique est un plastique.

4. Capteur optique selon l'une des revendications 1 à 3, **caractérisé en ce que** le matériau élastique est un élastomère.

5. Capteur optique selon l'une des revendications 1 à 4, **caractérisé en ce que** le matériau élastique assure l'isolation électrique du circuit imprimé (10) par rapport au boîtier 2a ou 2b.

6. Capteur optique selon la revendication 5, **caractérisé en ce que** les éléments élastiques peuvent être fixés à la carte de circuit imprimé (10) ou aux rainures (12) par des moyens de serrage, de verrouillage ou de clipsage.

7. Capteur optique selon l'une des revendications 5 ou 6, **caractérisé en ce qu'**un élément élastique sous forme de rail (13) est fixé à chaque bord du circuit imprimé (10) qui peut être inséré dans une rainure (12).

8. Capteur optique selon la revendication 7, **caractérisé en ce que** chaque rail (13) s'étend au moins approximativement sur toute la longueur du bord de la carte de circuit imprimé (10).

9. Capteur optique selon l'une des revendications 1 à 8, **caractérisé en ce que** la longueur de l'élément de rail (14) est sensiblement inférieure à la longueur du bord de la carte de circuit imprimé (10).

10. Capteur optique selon l'une des revendications 1 à 9, **caractérisé en ce que** le ou chaque élément de rail (14) est monté dans un renfoncement (15) débouchant sur le bord de la carte de circuit imprimé (10).

11. Capteur optique selon l'une des revendications 1 à 10, **caractérisé en ce que** les rainures (12) s'étendent chacune le long d'une ligne droite, les lignes droites étant parallèles les unes aux autres.

12. Capteur optique selon la revendication 7, **caractérisé en ce que** les axes longitudinaux des rails (13) sont parallèles aux bords de la carte de circuit imprimé (10).

13. Capteur optique selon l'une des revendications 1 à 12, **caractérisé en ce que** les axes longitudinaux des éléments de rail (14) sont parallèles aux bords de la carte de circuit imprimé (10).

14. Capteur optique selon l'une des revendications 1 à 13, **caractérisé en ce qu'**il s'agit d'un capteur de sécurité.
